# EUROPEAN PATENT APPLICATION

(11) **EP 4 687 197 A1**
(43) Date of publication of application: **04.02.2026**
(21) Application number: 25186743.8
(22) Date of filing: 01.07.2025
(51) Int. Cl.: H01M 50/107, H01M 50/152, H01M 50/167, H01M 50/342, H01M 50/583

(54) **CAP ASSEMBLY THAT PERFORMS CURRENT CUTOFF FUNCTION AND SECONDARY BATTERY INCLUDING THE SAME**

(30) Priority: 31.07.2024 KR 20240101551
(71) Applicant: SAMSUNG SDI CO., LTD., Yongin-si, Gyeonggi-do 17084 (KR)
(72) Inventor: KIM, Dae Kyu, 17084 Yongin-Si (KR)
(74) Representative: Marks & Clerk LLP

(57) **Abstract**

A cap assembly, including a current interruption device, and a cap down plate electrically connected to the current interruption device, wherein the current interruption device includes a metal plate, a connection located in a center of the metal plate, and at least one bridge along a perimeter of the connection, and the at least one bridge breaks if a current equal to or greater than a set value flows.

## Description

### BACKGROUND

### 1. Field

Embodiments relate to a cap assembly that performs a current cutoff function and a secondary battery including the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Secondary batteries are used in a variety of environments due to their excellent electrical properties, but their stability decreases in abnormal environments such as overcharging, over-discharging, exposure to high temperatures, or physical impact, so various developments have been made to improve the stability.

The above information disclosed in this Background section is for enhancement of understanding of the background of the present disclosure, and therefore, it may contain information that does not constitute related (or prior) art.

### SUMMARY

Embodiments include a cap assembly, including a current interruption device, and a cap down plate electrically connected to the current interruption device, wherein the current interruption device includes a metal plate, a connection located in a center of the metal plate, and at least one bridge formed along a perimeter of the connection, and the at least one bridge is configured to break if a current equal to or greater than a set value flows.

The at least one bridge may include one or more through holes arranged along a perimeter of the connection.

The metal plate, the connection and the at least one bridge may be integrated.

A thickness of the at least one bridge may be equal to or less than a thickness of the metal plate.

A thickness of the at least one bridge may be 0.1 mm to 0.3 mm.

The at least one bridge may include a notch.

The at least one bridge may include a first bridge and a second bridge at positions facing each other with the connection as a center.

The first bridge and the second bridge may have a same width.

The bridge may include a first bridge, a second bridge, and a third bridge located radially around the connection.

A width of the first bridge may be equal to or greater than a width of the second bridge or a width of the third bridge.

A width of the at least one bridge may be 0.4mm to 1.3mm.

The cap down plate and the connection of the current interruption device may be electrically connected together.

The cap down plate may include a vent portion configured to break if pressure is applied above a set value.

The vent portion may be annular, the vent portion surrounding the connection.

The cap assembly may further include a cap up plate connected with the cap down plate, wherein the cap up plate may be electrically connected to the current interruption device through the cap down plate.

The cap assembly may further include a gasket between the cap down plate and the current interruption device.

Embodiments include a secondary battery, including an electrode assembly in which a first electrode, a separator, and a second electrode are sequentially stacked, a case in which the electrode assembly is accommodated, and a cap assembly that is combined to an opening of the case, wherein the cap assembly includes a current interruption device and a cap down plate electrically connected to the current interruption device, wherein the current interruption device includes a metal plate, an electrode connection spaced from the metal plate, and at least one bridge formed along a perimeter of the electrode connection to connect the metal plate and the electrode connection, and the at least one bridge is configured to break if a current equal to or greater than a set value flows.

The secondary battery may further include an electrode tab electrically connecting the electrode assembly with the current interruption device.

The secondary battery may further include an insulator between the case and the cap assembly.

Embodiments include a method for manufacturing a secondary battery, the method including fabricating an electrode assembly by sequentially stacking a first electrode, a separator, and a second electrode, inserting the electrode assembly into a case with an opening formed on one side surface, and combining a cap assembly to the opening, wherein the cap assembly includes a current interruption device and a cap down plate electrically connected to the current interruption device, the current interruption device including a metal plate, a connection located in a center of the metal plate, and at least one bridge formed along a perimeter of the connection, the at least one bridge being configured to break when a current equal to or greater than a set value flows, and combining the cap assembly to the opening includes electrically connecting the current interruption device and the electrode assembly.

At least some of the above and other features of the invention are set out in the claims.

However, aspects and features of the present disclosure are not limited to those described above, and other aspects and features not mentioned will be clearly understood by a person of ordinary skill in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic diagram showing the appearance of a cap assembly according to one or more embodiments of the present disclosure;
FIGS. 2 and 3 are diagrams showing the appearance of the cap assembly according to the embodiment of FIG. 1 when an abnormality occurs in the secondary battery;
FIGS. 4 to 6 are plan views illustrating a current interruption device according to one or more embodiments of the present disclosure;
FIG. 7 is a plan view in which the current interruption device according to one or more embodiments of the present disclosure is enlarged;
FIG. 8 is a longitudinal sectional view of the secondary battery according to one or more embodiments of the present disclosure; and
FIG. 9 is a flowchart illustrating an example of a method for manufacturing a secondary battery according to one or more embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be interposed between the components.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

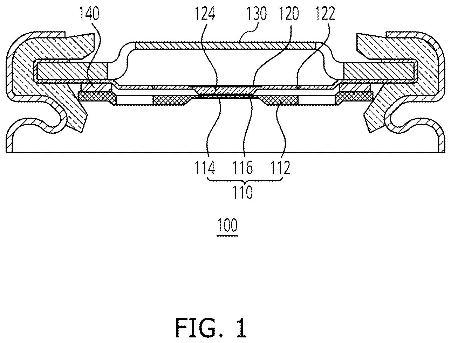

FIG. 1 is a schematic diagram showing the appearance of the cap assembly according to one or more embodiments of the present disclosure.

Referring to FIG. 1, a cap assembly 100 according to one or more embodiments of the present disclosure may include a current interruption device 110 and a cap down plate 120 that is electrically connected to the current interruption device 110.

The current interruption device 110 refers to a configuration to prevent safety problems such as fire due to overheating, overcharging, or overreaction that may occur inside the secondary battery. The current interruption device 110 may include a metal plate 112, a connection 114 located in a center of the metal plate 112, and at least one bridge 116 formed along a perimeter of the connection 114. In one or more embodiments, the metal plate 112, connection 114 and bridge 116 configuring the current interruption device 110 are all made of the same material and may be integrated (e.g., made in a same process into a monolithic and seamless structure).

In one or more embodiments, the current interruption device 110 may be made of a conductive metal or ceramic material. For example, for the current interruption device 110, conductive metals such as nickel, aluminum, copper, silver, zinc, tin, stainless steel (for example, SUS), nickel-plated steel, or a combination (alloys) thereof. In some embodiments, for the current interruption device 110, conductive ceramic materials such as polyaniline, polythiophene, poly(3,4-ethylenedioxythiophene), polyphenylene vinylene, or a combination thereof may be used.

Here, the bridge 116 of the current interruption device 110 may be configured to be broken when a current equal to or greater than a set value flows. For example, the bridge 116 normally operates as a part of a circuit through which a current flows, but when more current flows than necessary, the bridge 116 may melt away by the generated heat and act as a fuse to block the circuit.

According to one or more embodiments, a thickness of the bridge 116 may be equal to or less than a thickness of the metal plate 112. For example, the thickness of the metal plate 112 may be 0.3 mm to 0.5 mm, and the thickness of the bridge may be 0.1 mm to 0.3 mm. The thickness of the connection 114 is not limited, but it is desirable to maintain 0.1 mm to 0.2 mm optimized for internal welding.

The cap down plate 120 is located inside the cell of the secondary battery and may isolate the electrode assembly from the outside of the cell and seal the electrode assembly.

The cap down plate 120 may be electrically connected to the current interruption device 110. For example, the cap down plate 120 and the connection 114 of the current interruption device 110 are combined by welding. According to one or more embodiments, the cap down plate 120 may include a protrusion 124 protruding downward to be welded with the connection 114 of the current interruption device 110. The protrusion 124 may be made of the same material as the other configurations of the cap down plate 120, or may be made of a separate material with conductivity, depending on the option.

According to one or more embodiments, the cap down plate 120 may include a vent portion 122 configured to be broken when pressure is applied above a set value. For example, the vent portion 122 may be annular, surrounding the connection 114. For example, the vent portion 122 may be formed with an annular notch or hole centered on the protrusion 124 of the cap down plate 120, connected to the connection 114 located at the center of the current interruption device 110, and surrounding the protrusion 124. The vent portion 122 may be deformed or broken when the internal pressure of the secondary battery exceeds a certain pressure (working pressure), and may release the gas generated from the inside of the secondary battery to the outside of the secondary battery.

The cap assembly 100 may further include a cap up plate 130 connected to the cap down plate 120. Here, the cap up plate 130 is configured to cover the upper part of the secondary battery (in the orientation shown), seal the secondary battery to be isolated from the external environment, prevent the leakage of electrolytes, etc. inside, protect the secondary battery from external moisture or dust, and provide a welding site or contact area to the outside, which may electrically connect the secondary battery cells.

The cap up plate 130 may be electrically connected to the current interruption device 110 through the cap down plate 120. For example, the connection 114 of the current interruption device 110 may be connected to the protrusion 124 of the cap down plate 120 to form an electrical circuit from the cap up plate 130 to the current interruption device 110.

In one or more embodiments, the cap up plate 130 may be made of, for example, aluminum, stainless steel, nickel, or a combination thereof, similar to the cap down plate 120.

In one or more embodiments, the cap assembly 100 may further include a gasket 140 interposed between the cap down plate 120 and the current interruption device 110. Here, the gasket 140 may function as an insulator by sealing the cap assembly 100 and simultaneously creating a space between the cap down plate 120 and the current interruption device 110 so that the parts other than the protrusion 124 of the cap down plate 120 and the connection 114 of the current interruption device 110 do not come into contact with each other.

For example, the gasket 140 may include a polymeric material or a ceramic such as Polyvinyl Chloride (PVC), Polytetrafluoroethylene (PTFE, or Teflon), Polyethylene (PE), Epoxy Resin, Silicone, Polyvinylidene fluoride (PVDF), Polypropylene (PP), Polyacrylonitrile (PAN), or Polyethylene Oxide (PEO), and any of the appropriate compounds used as insulating materials in the industry may be used.

According to some embodiments of the present disclosure, the cap assembly 100 has an advantage in that the current interruption device effectively blocks the flow of current when an abnormal current flow or high-pressure gas is generated inside the battery, and at the same time, a vent portion rapidly releases the gas, thereby greatly improving the safety of the battery.

In particular, due to the limited amount of electrical energy that may be stored in proportion to the size and weight of the battery, there is a growing demand for larger secondary batteries with greater energy density in applications such as electric vehicles. As a result, as the output of the secondary battery increases, overcurrents may occur even when the internal pressure change does not increase rapidly. According to some embodiments of the present disclosure, there may be provided a cap assembly that includes a new safety device for a secondary battery that is activated according to the amount of current, rather than the operation of the current interruption device using the existing internal pressure.

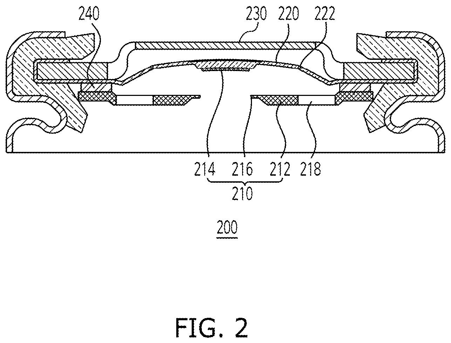

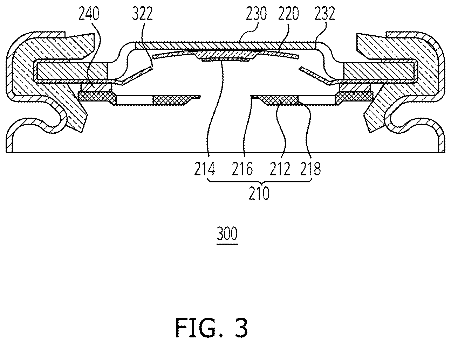

FIGS. 2 and 3 are diagrams showing the appearance of the cap assembly according to the one or more embodiments of the present disclosure when an abnormality occurs in the secondary battery.

Referring to FIG. 2, in a cap assembly 200 after the current equal to or greater than the set value flows to the current interruption device 210, the metal plate 212 and the cap down plate 220 may be electrically insulated by the broken bridge 216.

For example, when more current flows than necessary, the bridge 216 may melt away by the generated heat and break the connection between the connection 214 and the metal plate 212, which are integrated, like a fuse. In one or more embodiments, because the gasket 240 functions as an insulator by creating a space between the cap down plate 220 and the current interruption device 210 so that the parts other than the protrusion of the cap down plate 220 and the connection 214 of the current interruption device 210 do not come into contact with each other, due to the disconnection between the connection 214 and the metal plate 212, the cap down plate 220 that is electrically connected to the connection 214 by welding or the like may be electrically insulated from the metal plate 212 that forms the current interruption device 210.

At the same time, the cap up plate 230 which is electrically connected to the cap down plate 220 may also be electrically insulated from the metal plate 212 which is connected to the electrode assembly. This allows the excessive flow of current generated by the secondary battery to be cut off from the external environment.

In one or more embodiments, a ventilation hole 218 of the current interruption device 210 is a hole penetrating the current interruption device 210 to prevent the gas generated inside the secondary battery from being sealed by the current interruption device 210. Thereafter, the gas generated from the inside of the secondary battery increases the pressure inside the secondary battery, so that the cap down plate 220 may be bent toward the outer side of the secondary battery, that is, toward the cap up plate 230. This further widens the gap between the connection 214 connected to the cap down plate 220 and the metal plate 212 to prevent unwanted electrical connection.

The increased pressure inside the secondary battery may break the vent portion 222 of the cap down plate 220. This will be described with reference to FIG. 3.

The rest of the configuration is the same as that described above with reference to FIG. 1.

Referring to FIG. 3, in a cap assembly 300 after a pressure equal to or greater than a set value is applied to the cap plate 220, the gas generated inside the secondary battery may be released to the outside of the secondary battery by the broken vent portion 322 of the cap down plate 220. In some embodiments, the cap up plate 230 may include one or more outlets 232. This allows the gas generated inside the secondary battery to be released to the outside of the secondary battery.

FIG. 3 shows that in the cap assembly 300 after a pressure equal to or greater than a set value is applied, the bridge 216 of the current interruption device 210 is broken due to the flow of a current equal to or greater than a set value, but other scenarios are possible.

For example, even when the bridge 216 of the current interruption device 210 is not broken and the metal plate 212 and the connection 214 are integrated with each other, the gas generated from the inside of the secondary battery may be moved to the outside of the current interruption device 210 through the ventilation hole 218. The gas moved to the outside of the current interruption device 210 increases the pressure in the confined space inside the secondary battery formed by the cap down plate 220, and as a result, the vent portion 322 may be broken when a pressure equal to or greater than a set value is applied thereto.

According to the one or more embodiments, even after the vent portion 322 is broken, the bridge 216 is not broken, so that the metal plate 212 and the connection 214 may be integrated with each other, and the connection 214 and the protrusion of the cap down plate 220 may be integrated with each other. However, the vent portion 322 may be formed with an annular notch or hole centered on the protrusion of the cap down plate 220 and surrounding the protrusion. Therefore, when the vent portion 322 of the cap down plate 220 is broken, the connection 214 of the current interruption device 210 and the cap down plate 220 are electrically insulated to each other by the gasket 240, and only the cap up plate 230, which is electrically connected to the cap down plate 220, may also be electrically isolated with the current interruption device 210.

The rest of the configuration is the same as that described above with reference to FIGS. 1 and 2.

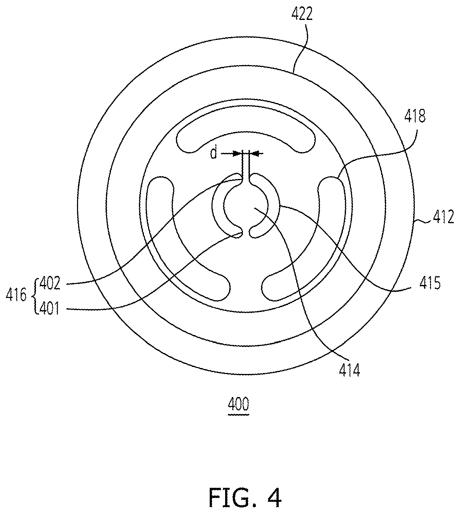

FIGS. 4 to 6 are plan views illustrating a current interruption device according to one or more embodiments of the present disclosure.

Referring to FIG. 4, a current interruption device 400 may include a metal plate 412 that configures the current interruption device 400, a connection 414 that is integrated with the metal plate 412 and is electrically connected to a cap down plate, at least one through hole 415 that penetrates the metal plate 412 and is formed along the perimeter of the connection, and a bridge 416 formed by the through hole 415.

In the one or more embodiments, the connection 414 may be formed on a portion of the metal plate 412 at various locations. However, it is desirable that the connection 414 is located in the center of the metal plate 412 to achieve symmetry, so as to facilitate the coupling process of the metal plate 412 during the manufacturing process of the secondary battery.

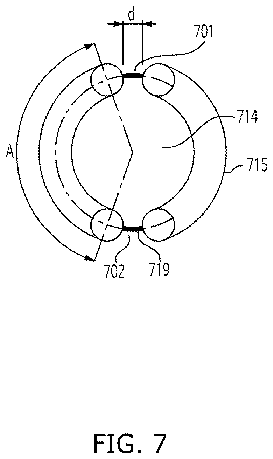

According to the one or more embodiments, the width d of the bridge 416 may be 0.4 mm to 1.3 mm. The width d of the bridge 416 may be selected according to the current set value at which the bridge 416 may be caused to break. This will be described with reference to FIG. 7.

The current interruption device 400 according to one or more embodiments may further include a ventilation hole 418. The ventilation hole 418 of the current interruption device 400 is a hole penetrating the current interruption device 400 to prevent the gas generated inside the secondary battery from being sealed by the current interruption device 400. In other words, the gas generated from the inside of the secondary battery may be moved to the outside of the current interruption device 400 through the ventilation hole 418.

The current interruption device 400 according to one or more embodiments may further include an additional vent portion 422. The additional vent portion 422 may be configured to be broken (e.g., to break) when a pressure equal to or greater than a certain set value is applied thereto, similar to the above-described vent portion of the cap down plate. Here, the setting value of the additional vent portion 422 and the setting value of the vent portion of the cap down plate may be the same. Therefore, the cap down plate according to one or more embodiments of the present disclosure may include at least one safety device including the additional vent portion 422 or the vent portion of the cap down plate.

The additional vent portion 422 may be annular, surrounding the connection 414. For example, the additional vent portion 422 may be formed with an annular notch or hole centered on the connection 414 located at the center of the current interruption device 400, and surrounding the connection 414.

The number of bridges 416 in the present disclosure may vary. As shown in FIG. 4, the bridge 416 according to one or more embodiments may include a first bridge 401 and a second bridge 402 that are formed at positions facing each other with the connection 414 as the center. In other words, the connection is between the first bridge 401 and the second bridge 402. Here, the width of the first bridge 401 and the width of the second bridge 402 may be the same.

In one or more other embodiments, the width of the first bridge 401 and the width of the second bridge 402 may be different. When there are a plurality of bridges 416, the limit current value of the secondary battery may be determined by the widest bridge 416. For example, when the width of the first bridge 401 is equal to or greater than the width of the second bridge 402, the limit current value of the secondary battery may be determined by the first bridge 401.

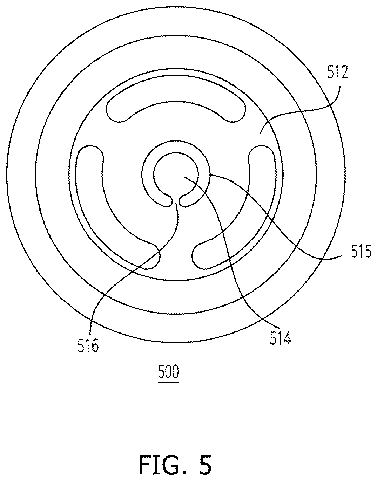

Referring to FIG. 5, a current interruption device 500 according to one or more embodiments may include (only) one bridge 516. For example, the current interruption device 500 according to one or more embodiments may include a metal plate 512 that configures the current interruption device 500, a connection 514 that is integrated with the metal plate 512 and is electrically connected to a cap down plate, (only) one through hole 515 that penetrates the metal plate 512 and is formed along the perimeter of the connection, and one bridge 516 formed by the through hole 515.

However, one bridge 516 may not be properly fixed, and the connection 514 may be lifted in the process of internal welding, or may be bent in the process of moving the secondary battery after welding.

The rest of the configuration is the same as that described above with reference to FIG. 4.

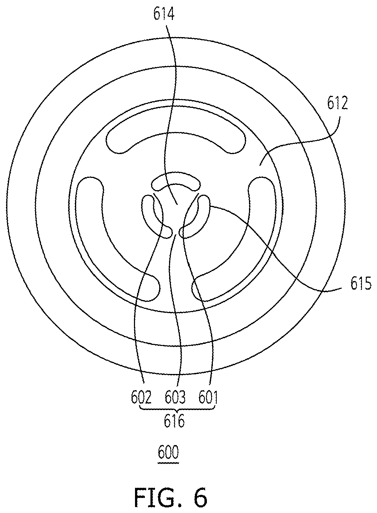

Referring to FIG. 6, a current interruption device 600 according to one or more embodiments may include (only) three bridges 616. For example, the current interruption device 600 according to one or more embodiments may include a metal plate 612 that configures the current interruption device 600, a connection 614 that is integrated with the metal plate 612 and is electrically connected to a cap down plate, (only) three through holes 615 that penetrate the metal plate 612 and are formed along the perimeter of the connection, and three bridges 616 formed by the three through holes 615.

Here, the bridges 616 may include a first bridge 601, a second bridge 602 and a third bridge 603 radially formed around the connection 614. In some embodiments, the width of the first bridge 601 may be equal to or greater than the width of the second bridge 602 or the width of the third bridge 603. When there are a plurality of bridges 616, the limit current value of the secondary battery may be determined by the widest bridge, so that the limit current value of the secondary battery may be determined by the first bridge 601.

However, the current interruption device 600 having three or more bridges 616 is less desirable from a probabilistic point of view because the current may be cut off properly only when all the bridges 616 are broken.

The rest of the configuration is the same as that described above with reference to FIG. 4.

Referring to FIGS. 4 to 6, the number of bridges may vary, but it is desirable that the number of bridges be two, and that the two bridges be designed to face each other to improve stability.

FIG. 7 is a plan view in which the current interruption device according to one or more embodiments of the present disclosure is enlarged.

Referring to FIG. 7, the widths d of the bridges 701 and 702 according to one or more embodiments may be selected according to the current setting value that may break the bridge 416. This is shown in the following Table 1, along with an angle (A) formed by both ends of the through hole 715 with respect to the center of connection 714 and the operating time at the limit current setpoint of 50A.

**[Table 1]**

| Example | width (d)(mm) | angle (A)(°) | operating time (sec) at 50 A |
|---|---|---|---|
| 1 | 0.4 | 140 | 62 |
| 2 | 0.7 | 130 | 71 |
| 3 | 0.9 | 120 | 77 |
| 4 | 1.1 | 110 | 85 |
| 5 | 1.3 | 100 | 93 |

In FIG. 7, the width of the first bridge 701 and the width of the second bridge 702 are shown as equal, but the width of the first bridge 701 and the width of the second bridge 702 may be different as shown in FIG. 4. In this case, the limit current value of the secondary battery may be determined by the width d of the widest bridge 701 or 702.

The bridges 701, 702 of the current interruption device according to one or more embodiments may include a notch 719. For example, in Table 1, in the case of Example 4 and Example 5, when the width of the bridge 701, 702 is wide, the notch 719 may be provided because the limit working pressure of the cap down plate is reached before the limit current value of the current interruption device is exceeded.

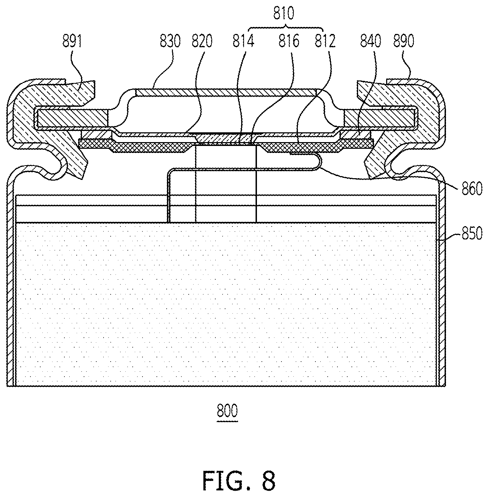

FIG. 8 is a longitudinal cross-sectional view of the secondary battery according to one or more embodiments of the present disclosure.

Referring to FIG. 8, a secondary battery 800 according to one or more embodiments of the present disclosure may include an electrode assembly 850 in which a first electrode, a separator, and a second electrode are sequentially stacked, a case 890 in which the electrode assembly 850 is accommodated, and a cap assembly that is combined to an opening of the case 890.

In one or more embodiments, the electrode assembly 850 may be formed into a roll shape by sequentially winding the first electrode, the separator, and the second electrode. The first electrode and the second electrode each have a coated portion of an area where an active material is applied and a non-coated portion of an area where an active material is not applied and the substrate is exposed, on both sides of a substrate made of a thin metal plate. For example, the first electrode may be a positive electrode formed by coating a positive electrode active material on an aluminum (Al) substrate, and the second electrode may be a negative electrode formed by coating a negative electrode active material on a copper (Cu) substrate. The first electrode, the second electrode, and the separator may be impregnated with an electrolyte (not shown).

For the explanation of the disclosure, in FIG. 8, the secondary battery 800 is shown as a cylindrical secondary battery, but other battery types are possible and may include secondary batteries of any shape, such as square secondary batteries, pouch secondary batteries, and coin secondary batteries.

The case 890 may form the overall appearance of the secondary battery 800 and may be made of a conductive metal such as aluminum, an aluminum alloy, stainless materials (for example, SUS), or nickel-plated steel. In some embodiments, the case 890 may provide a space in which the electrode assembly 850 is accommodated. For example, when the secondary battery 800 is a cylindrical secondary battery, the case 890 may have the shape of a cylinder.

The case 890 is provided with a fully open opening to allow the electrode assembly 850 to be inserted from the other side thereof. The cap assembly may be combined to seal the opening after the electrode assembly 850 is inserted into the case 890.

The cap assembly may include a current interruption device 810; and a cap down plate 820 that is electrically connected to the current interruption device 810, in which the current interruption device 810 may include a metal plate 812, an electrode connection 814 spaced apart from the metal plate 812, and at least one bridge 816 formed along a perimeter of the electrode connection 814 and connecting the metal plate 812 and the electrode connection 814, in which the bridge 816 is configured to be broken when a current equal to or greater than a set value flows.

In one or more embodiments, the cap assembly may further include a cap up plate 830 that is electrically connected to the cap down plate 820. In one or more embodiments, the cap assembly may further include a gasket 840 interposed between the cap down plate 820 and the current interruption device 810.

The secondary battery 800 according to one or more embodiments of the present disclosure may further include an electrode tab 860 that electrically connects the electrode assembly 850 with the current interruption device 810. Here the electrode tab 860 may be formed extending from the non-coated portion of the electrode assembly 850.

In one or more embodiments, the current interruption device 810 and the electrode tab 860 may be combined by welding. For example, the current interruption device 810 and the electrode tab 860 may be welded using ultrasonic welding, laser welding, resistance welding, tungsten inert gas (TIG) welding, or a combination thereof. Welding methods may vary from those above, and various methods that are generally used for welding the two materials may be used, according to the choice of the person of ordinary skill in the art.

In one or more embodiments, the electrode connection 814 of the current interruption device 810 and the cap down plate 820 may be welded and combined. The method of welding the electrode connection 814 and the cap down plate 820 is the same as the method of welding the current interruption device 810 and the electrode tab 860 as described above.

The secondary battery 800 according to one or more embodiments of the present disclosure may further include an insulator 891 interposed between the case 890 and the cap assembly. Here, the insulator 891 may be made of a polymer including ethylene propylene diene monomer (EPDM), polypropylene (PP), polyimide (PI), polyethylene terephthalate (PET), polycarbonate (PC), or a combination thereof.

As another example, the insulator 891 may be made of a ceramic material including epoxy resin, alumina (Al₂O₃), Zirconia (ZrO₂), Aramid Fiber, NOMEX (or meta-aramid, poly(meta-phenyleneisophthalamide)), or a combination of thereof. However, the material of the insulator 891 may include various materials with excellent plasticity and insulating properties, depending on the option.

The rest of the configuration is the same as that described above with reference to FIG. 1.

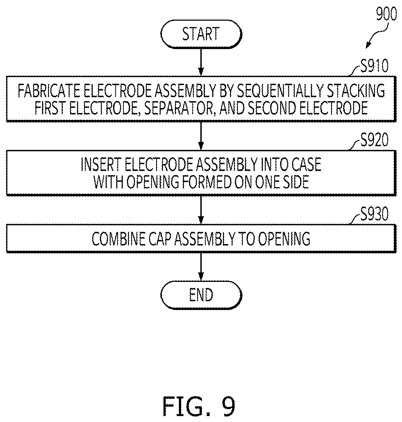

FIG. 9 is a flowchart illustrating an example of a method for manufacturing a secondary battery according to one or more embodiments of the present disclosure.

A method 900 of manufacturing a secondary battery according to one or more embodiments of the present disclosure may be started by fabricating an electrode assembly by sequentially stacking a first electrode, a separator, and a second electrode (S910).

Thereafter, the electrode assembly may be inserted into a case with an opening formed on one side surface (S920).

Thereafter, the cap assembly may be combined to the opening (S930). Here, the cap assembly may include a current interruption device and a cap down plate that is electrically connected to the current interruption device, In some embodiments, the current interruption device may include a metal plate, a connection located in a center of the metal plate, and at least one bridge formed along a perimeter of the connection, and the bridge is configured to be broken when a current equal to or greater than a set value flows.

The step S930 of combining the cap assembly to the opening may include a step of electrically connecting the current interruption device and the electrode assembly. For example, the electrode assembly and the current interruption device may be electrically connected by the electrode tab.

These and other aspects and features of the present disclosure will be described in or will be apparent from the description of embodiments of the present disclosure.

When the secondary battery is operated abnormally, such as when gas is generated inside the secondary battery and the internal pressure rises while the secondary battery repeats charging and discharging, or when an internal short-circuit is formed due to the break of the separator, etc., and a direct electrical connection occurs between the anode and cathode inside the secondary battery, heat may be generated inside the battery, and high quantity of electrical energy may be released, causing an explosion or fire of the secondary battery.

According to some embodiments of the present disclosure, in case of abnormal operation of the battery, a current interruption device (CID) may have not only a current interruption function due to an internal pressure but also a current interruption function due to an increase in a current, thereby improving the stability of a secondary battery.

According to some embodiments of the present disclosure, the cap assembly has an advantage in that the current interruption device effectively blocks the flow of current when an abnormal current flow or high-pressure gas is generated inside the battery, and at the same time, a vent portion rapidly releases the gas, thereby greatly improving the safety of the battery.

Although the present disclosure has been described above with respect to embodiments thereof, the present disclosure is not limited thereto. Various modifications and variations can be made thereto by those skilled in the art within the scope of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### [DESCRIPTION OF SOME REFERENCE SYMBOLS]

100:cap assembly
110: current interruption device
112: metal plate
114: connection
116: bridge
120: cap down plate
122: vent portion
124: protrusion
130: cap up plate
140: gasket

## Claims

1. A cap assembly (100), comprising:
a current interruption device (110); and
a cap down plate (120) electrically connected to the current interruption device (110), wherein:
the current interruption device (110) comprises a metal plate (112), a connection (114) located in a center of the metal plate (112), and at least one bridge (116) along a perimeter of the connection (114), and
the at least one bridge (116) is configured to break if a current equal to or greater than a set value flows.

2. The cap assembly (100) as claimed in claim 1, wherein the at least one bridge (116) includes one or more through holes arranged along a perimeter of the connection (114).

3. The cap assembly (100) as claimed in claim 2, wherein the metal plate (112), the connection (114) and the at least one bridge (116) are integrated.

4. The cap assembly (100) as claimed in claim 1, 2 or 3, wherein a thickness of the at least one bridge (116) is equal to or less than a thickness of the metal plate (112).

5. The cap assembly (100) as claimed in any preceding claim, wherein the at least one bridge (116) comprises a notch.

6. The cap assembly (100) as claimed in any preceding claim, wherein the at least one bridge (116) comprises a first bridge (401) and a second bridge (402) at positions facing each other with the connection (414) as a center.

7. The cap assembly (100) as claimed in claim 6, wherein the first bridge (401) and the second bridge (402) have a same width.

8. The cap assembly (100) as claimed in any preceding claim, wherein the at least one bridge comprises a first bridge (601), a second bridge (602), and a third bridge (603) located radially around the connection (614).

9. The cap assembly (100) as claimed in claim 8, wherein a width of the first bridge (601) is equal to or greater than a width of the second bridge (602) or a width of the third bridge (603).

10. The cap assembly (100) as claimed in any preceding claim, wherein the cap down plate (120) comprises a vent portion (122) configured to break if pressure is applied above a set value.

11. The cap assembly (100) as claimed in claim 10, wherein the vent portion (122) is annular, the vent portion (122) surrounding the connection (114).

12. The cap assembly (100) as claimed in any preceding claim, further comprising a cap up plate (130) connected with the cap down plate (120), wherein the cap up plate (130) is electrically connected to the current interruption device (110) through the cap down plate (120).

13. The cap assembly (100) as claimed in any preceding claim, further comprising a gasket (140) between the cap down plate and the current interruption device (110).

14. A secondary battery (800), comprising:
an electrode assembly (850) in which a first electrode, a separator, and a second electrode are sequentially stacked;
a case (890) in which the electrode assembly is accommodated; and
a cap assembly that is combined to an opening of the case (890), wherein the cap assembly comprises a current interruption device (810) and a cap down plate (820) electrically connected to the current interruption device (810), wherein:
the current interruption device (810) comprises a metal plate (812), an electrode connection (814) spaced from the metal plate (812), and at least one bridge (816) formed along a perimeter of the electrode connection (814) to connect the metal plate (812) and the electrode connection (814), and
the at least one bridge (816) is configured to break if a current equal to or greater than a set value flows.

15. A method for manufacturing a secondary battery (800), the method comprising:
fabricating an electrode assembly (850) by sequentially stacking a first electrode, a separator, and a second electrode;
inserting the electrode assembly (850) into a case (890) with an opening formed on one side surface; and
combining a cap assembly to the opening, wherein:
the cap assembly comprises a current interruption device (810) and a cap down plate (820) electrically connected to the current interruption device (810),
the current interruption device (810) comprises a metal plate (812), a connection located in a center of the metal plate (812), and at least one bridge (816) formed along a perimeter of the connection,
the at least one bridge (816) is configured to break if a current equal to or greater than a set value flows, and
combining the cap assembly to the opening comprises electrically connecting the current interruption device (810) and the electrode assembly (850).
